# EUROPÄISCHE PATENTSCHRIFT

(11) **EP 1 459 939 B1**
(45) Veröffentlichungstag und Bekanntmachung des Hinweises auf die Patenterteilung: **29.11.2006**
(21) Anmeldenummer: 04003974.5
(22) Anmeldetag: 21.02.2004
(51) Int. Cl.: B60R 13/08, F02B 77/13, G10K 11/16

(54) **Schallreduktionssystem für Kraftfahrzeuge**
Sound dampening system for a vehicle
Système d'insonorisation pour un véhicule

(30) Priorität: 20.03.2003 DE 10313790
(43) Veröffentlichungstag der Anmeldung: 22.09.2004
(73) Patentinhaber: Intier Automotive Näher GmbH, 71706 Markgröningen (DE)
(72) Erfinder: Stricker, Klaus, 71706 Markgröningen (DE); Reichert, Dieter, 73084 Salach (DE)
(74) Vertreter: Patentanwälte Ruff, Wilhelm, Beier, Dauster & Partner

(56) Entgegenhaltungen:
- EP-A- 0 063 715
- EP-A- 0 887 483
- EP-A- 1 029 742
- WO-A-98/04438
- WO-A-02/083461
- DE-A- 19 739 778
- GB-A- 2 168 419
- PATENT ABSTRACTS OF JAPAN Bd. 2000, Nr. 21, 3. August 2001 (2001-08-03) & JP 2001 107938 A (NIPPON STAD WELDING KK; TOGO SEISAKUSHO CORP), 17. April 2001 (2001-04-17)
- PATENT ABSTRACTS OF JAPAN Bd. 1996, Nr. 09, 30. September 1996 (1996-09-30) & JP 8 129109 A (TOYODA GOSEI CO LTD), 21. Mai 1996 (1996-05-21)

## Beschreibung

Die Erfindung betrifft ein Schallreduktionssystem für Kraftfahrzeuge.

Schallreduktionssysteme für Kraftfahrzeuge dienen zur Reduzierung der Motor-, Antriebsstrang- und Rollgeräusche und werden üblicherweise im Stirnwand-, Tunnel-, Boden- und Heckbereich angeordnet. Eine Dimensionierung erfolgt derart, dass ein festlegbarer Geräuschpegel im Fahrzeuginnenraum nicht überschritten wird. Eine Reduktion, insbesondere der durch den Motor bedingten Störgeräusche, wird vor allem im unteren und mittleren Frequenzbereich angestrebt. Derartige Systeme bestehen üblicherweise aus Absorbermaterialien oder Feder-Masse-Systemen, die meist als Formteil am Kraftfahrzeug angebracht sind.

Absorbermaterialien dämpfen die Schallwellen, d.h. die Schallenergie wird im Absorber zumindest teilweise in Wärmeenergie umgewandelt. Um eine Schallwelle mit höchstmöglicher Absorption zu dämpfen, muss die Dicke des Absorbers mindestens 1/4 der zu dämpfenden Wellenlänge betragen. Das bedeutet, dass niederfrequente Störgeräusche eine entsprechend große Dicke des Absorbermaterials erfordern. Da dies im Allgemeinen, beispielsweise aus Platzgründen, nicht immer möglich ist, werden derartige Absorber hauptsächlich zur Reduzierung von mittel- und hochfrequenten Störgeräuschen eingesetzt, wodurch die Dämpfung im niederfrequenten Bereich häufig nicht ausreichend ist.

Feder-Masse-Systeme haben eine schalldämmende Funktion, d.h. sie basieren auf einer zumindest teilweisen Reflektion der Schallwellen. Feder-Masse-Systeme bestehen üblicherweise aus Vlies-, Vliesfaserverbund- oder Schaummaterialien, die als Feder wirken, und Schwerschichten aus EPDM-, EVA-, PUR- oder PVC-Materialien, welche die Masse des Systems bilden. Um ausreichende Dämmungseigenschaften zu erzielen, ist eine Mindestmasse der Schwerschicht notwendig, wodurch sich ein verhältnismäßig hohes Gesamtgewicht derartiger Systeme ergibt. Weiterhin weisen sie nur geringe schallabsorbierenden Eigenschaften zum Fahrzeuginnenraum hin auf.

In der DE 197 39 778 A ist ein Bauteil für Fahrzeuge beschrieben, welches sowohl vibrationsdämpfende als auch schallabsorbierende Eigenschaften aufweist. Das Bauteil umfasst ein steifes Teil, welches ausserhalb eines vibrierenden Bereichs eines Fahrzeugs angeordnet ist, und einen Schaumkörper, welcher auf eine Oberfläche des steifen Teils auflaminiert ist.

Der Erfindung liegt daher die Aufgabe zugrunde, ein Schallreduktionssystem für Kraftfahrzeuge bereitzustellen, welches bei geringem Systemgewicht günstige schalltechnischen Eigenschaften aufweist.

Diese Aufgabe wird durch ein Schallreduktionssystem nach Anspruch 1 gelöst.

Das erfindungsgemäße Schallreduktionssystem weist sowohl schalldämmende als auch schalldämpfende Eigenschaften im Bereich von 30 Hz bis 20 kHz auf. Erfindungsgemäß umfasst das Schallreduktionssystem hierzu eine biegesteife Folie, eine Federschicht, die mit einer einem Karosserieteil des Kraftfahrzeugs zuzuwendenden Seite der Folie verbunden ist, und Einrichtungen, insbesondere an der Folie und der Federschicht, zum Befestigen an dem Karosserieteil unter Kompression der Federschicht. Die biegesteife Folie und die Federschicht bilden in Kombination mit dem Karosserieteil ein sogenanntes Sandwichisolationssystem, bei dem sich unterschiedliche schallreduzierende Effekte vorteilhaft überlagern und ergänzen. Ein erster Effekt ist hierbei die Verringerung der Schwingungsfähigkeit des Karosserieteils durch den Verbund mit der biegesteifen Folie. Über die komprimierte Federschicht ist weiterhin eine Absorption, d.h. eine Dämpfung des Schalls beim Durchtritt durch das System erzielbar. Weiterhin sind auch schalldämmende Effekte aufgrund des durch das System gebildeten Feder-Masse-Systems vorhanden. Die Biegesteifigkeit der Folie bewirkt bei einer Befestigung auf dem Karosserieteil eine flächige Kompression der Federschicht trotz punktueller Befestigung, wobei die Federschicht teilweise, d.h. unter Erhalt einer verbleibenden Komprimierbarkeit, komprimiert wird. Das Schallreduktionssystem kann sowohl im Innenraum des Kraftfahrzeugs als auch außen, beispielsweise im Motorraum, angebracht sein. Das System wird dabei grundsätzlich derart angebracht, dass die Federschicht dem Karosserieteil zugewandt ist.

Auf der von der Federschicht abgewandten Seite der Folie ist eine schallabsorbierende Schicht, insbesondere ein schallabsorbierendes Vlies und/oder ein schallabsorbierender Schaum, angeordnet. Die schallabsorbierende Schicht dient der Dämpfung von insbesondere mittel- und hochfrequenten Schallwellen im Innenraum des Kraftfahrzeugs. Das schallabsorbierende Vlies bzw. Schaummaterial kann beispielsweise aus Polyolefin-Schaum, insbesondere Polyethylen-Schaum, und Mischfaservlies, Baumwolle, einem Flocken-Faserverbund und/oder aus geschreddertem Schaum mit Fasereinlagen bestehen. Die Dicke der schallabsorbierenden Schicht liegt vorteilhafterweise in einem Bereich von 2 mm bis 30 mm.

In einer Weiterbildung der Erfindung weist die Folie eine der Form des Karosserieteils angepasste, insbesondere dreidimensionale, Form auf. Mit einer derartigen Formgebung ist ein Einbau des Schallreduktionssystems einfach und dem Einbauort im Kraftfahrzeug angepasst möglich. Die Folie besteht vorzugsweise aus plastisch, insbesondere thermoplastisch, verformbarem Material.

In einer Weiterbildung der Erfindung sind die Einrichtungen für eine mechanische, lösbare Befestigung ausgebildet. Mechanische Befestigungseinrichtungen bieten ein gutes Kosten-Nutzen-Verhältnis und sind verfügbar. Die Lösbarkeit bietet Vorteile bei einer eventuell notwendigen Demontage des Schallreduktionssystems, beispielsweise im Zuge einer Reparatur.

In einer Weiterbildung der Erfindung sind die Einrichtungen Löcher in der Folie und der Federschicht, durch die auf dem Karosserieteils angeordnete Bolzen durchsteckbar sind. Mit derartigen Befestigungseinrichtungen ist es möglich, das Schallreduktionssystem auf dem Karosserieteil herkömmlich zu befestigen, d.h. eine Anpassung des Karosserieteils an das erfindungsgemäße Schallreduktionssystems ist nicht notwendig.

In einer Weiterbildung der Erfindung sind auf den Bolzen zur Verriegelung Clipse aufsteckbar. Mit Hilfe derartiger Clipse ist eine einfache und leicht lösbare Befestigung auf dem Karosserieteil möglich, wobei durch die Clipse Druck auf die Folie ausgeübt wird, der aufgrund ihrer Biegesteifigkeit flächig auf die Federschicht wirkt.

In einer Weiterbildung der Erfindung besteht die Federschicht aus einer Schaumstoffschicht, vorzugsweise aus viskoelastischem Schaum, insbesondere aus einem viskoelastischen und/oder adhäsiven Polyurethanschaum. Durch die Viskoelastizität der Federschicht bzw. des Schaums wird ein Teil der Schallenergie in Wärme umgewandelt, wodurch die Federschicht schallabsorbierende Eigenschaften aufweist. Die Realisierung als Polyurethanschaum ist großserientechnisch einfach und kostengünstig möglich. Vorteilhafterweise ist der Schaumstoff offenporig. Alternativ besteht die Federschicht aus Flockenverbundmaterial, Flockfasermaterial, Faservliesmaterialien oder Schnittschäumen. Diese Materialien weisen ebenfalls günstige schalltechnische Eigenschaften auf und sind günstig herzustellen.

In einer Weiterbildung der Erfindung ist die Federschicht, insbesondere die Schaumstoffschicht, an die Folie angeschäumt, aufkaschiert oder aufgeklebt. Derartige Fertigungsschritte sind einfach durchzuführen und resultieren in einer kraftschlüssigen Verbindung zwischen der Federschicht und der Folie. Eine Verbesserung der Haftung des Schaums ist dadurch erreichbar, dass die Folie mindestens auf ihrer der Federschicht zugewandten Seite einen Haftvermittler in Form einer Oberflächenbehandlung, vorzugsweise einer Coronabehandlung, Fluorierung bzw. einer Beflammung, aufweist, oder mit einer Haftvermittlerschicht, vorzugsweise einer Haftvermittlerfolie oder einem Haftvlies, ausgerüstet ist. Ein Haftvlies kann beispielsweise während eines Tiefziehvorgangs auf der gewünschten Seite der Folie mit dieser verbunden werden.

In einer Weiterbildung der Erfindung ist auf der von der Federschicht abgewandten Seite der Folie eine schallabsorbierende Schicht, insbesondere ein schallabsorbierendes Vlies und/oder ein schallabsorbierender Schaum, angeordnet. Die schallabsorbierende Schicht dient der Dämpfung von insbesondere mittel- und hochfrequenten Schallwellen im Innenraum des Kraftfahrzeugs. Das schallabsorbierende Vlies bzw. Schaummaterial kann beispielsweise aus Polyolefin-Schaum, insbesondere Polyethylen-Schaum, und Mischfaservlies, Baumwolle, einem Flocken-Faserverbund und/oder aus geschreddertem Schaum mit Fasereinlagen bestehen. Die Dicke der schallabsorbierenden Schicht liegt vorteilhafterweise in einem Bereich von 2 mm bis 30 mm.

In einer Weiterbildung der Erfindung liegt die Dichte der Folie in einem Bereich von 300 kg/m³ bis 3000 kg/m³, bevorzugt 800 kg/m³ bis 2700 kg/m³, insbesondere 900 kg/m³ bis 1100 kg/m³. Eine derartige Dichte stellt einen guten Kompromiss aus sich ergebendem Systemgewicht und Schallreduktionseigenschaften dar.

In einer Weiterbildung der Erfindung besteht die Folie aus Aluminium oder Kunststoff, vorzugsweise thermoplastischem Kunststoff, insbesondere aus Polypropylen, Polyethylen, Acrylnitril/Butadien/Styrol, Polyamid, Polyethylenterephtalat, Basis Ethylen/Propylen-Terpolymer/Propylen oder Acrylnitil/Styrol/Acrylester, wobei Polypropylen bevorzugt wird. Sie besitzen eine ausreichende Biegesteifigkeit, sind gut verarbeitbar und weisen eine geeignete Dichte auf.

In einer Weiterbildung der Erfindung liegt die Dicke der Folie in einem Bereich von 0,3 mm bis 5 mm, insbesondere 0,7 mm bis 3 mm. Die Dicke wird unter anderem derart gewählt, dass sich eine ausreichende Biegesteifigkeit der Folie ergibt. Das resultierende Flächengewicht der Folie liegt vorteilhafterweise in einem Bereich von 0,2 kg/m² bis 7 kg/m², bevorzugt 0,5 kg/m² bis 3 kg/m², insbesondere 0,6 kg/m² bis 2 kg/m².

In einer Weiterbildung der Erfindung kann auf der von der Federschicht abgewandten Seite der Folie noch eine Schwerschicht angeordnet sein, wobei die Schwerschicht insbesondere zwischen der Folie und einer schallabsorbierenden Schicht angeordnet ist. Dies dient zur Erfüllung höchster Schallreduktionsanforderungen, wobei auf der Schwerschicht wiederum eine schallabsorbierende Schicht zur Absorption mittlerer und hoher Frequenzen im Fahrzeuginnenraum angeordnet sein kann. Die Schwerschicht dient als zusätzliche Masse des Feder-Masse-Systems und verbessert die schalldämmenden Eigenschaften des Gesamtsystems. Ein derartiger Aufbau kann beispielsweise für Dieselfahrzeuge sinnvoll sein.

In einer Weiterbildung der Erfindung ist das Schallreduktionssystem, insbesondere die Folie und die Schaumstoffschicht, an dem Karosserieteil unter teilweiser Kompression der Schaumstoffschicht befestigt.

In einer Weiterbildung der Erfindung ist zwischen der Federschicht und dem Karosserieteil eine Körperschalldämpfungsfolie auf Bitumen- oder Kunststoffbasis angebracht, Diese Maßnahme verbessert die schalldämpfenden Eigenschaften des Gesamtsystems. Die Körperschalldämpfungsfolie ist bevorzugt mit einer Aluminiumabdeckung als Sandwich-System ausgeführt.

Die vorstehenden und weiteren Merkmale von bevorzugten Ausgestaltungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können.

Vorteilhafte, nachfolgend beschriebene Ausführungsformen der Erfindung sind in den Zeichnungen dargestellt, in denen zeigen:
- Fig. 1: eine schematische Darstellung eines Schallreduktionssystems,
- Fig. 2: eine schematische Darstellung des auf einem Karosserieteil befestigten Schallreduktionssystems von Fig. 1 und
- Fig. 3: eine schematische Darstellung eines Schallreduktionssystems wie in Fig. 2, das jedoch der Form des Karosserieteils angepasst dreidimensional geformt ist.

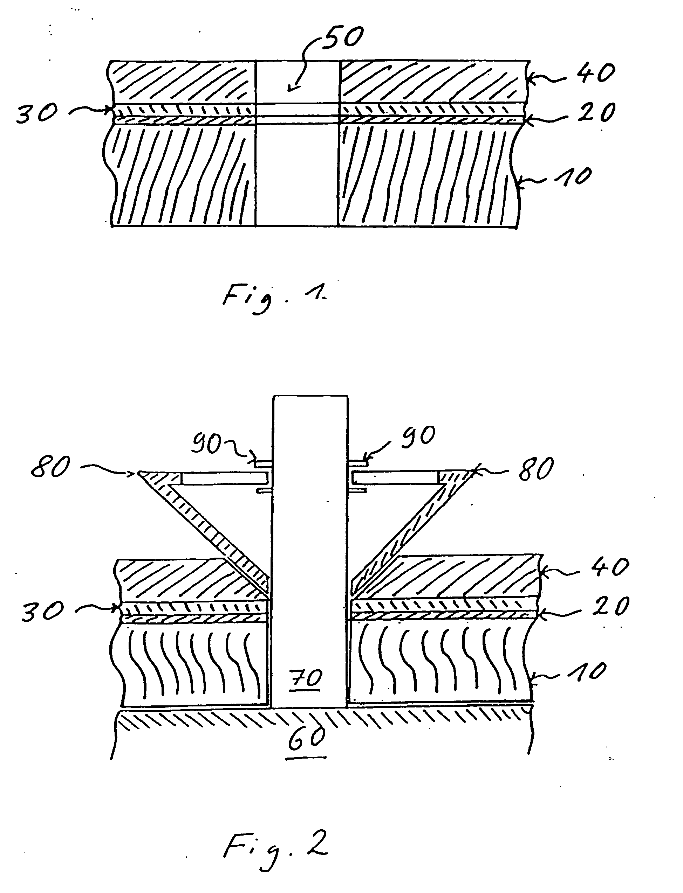

Fig. 1 zeigt ein Schallreduktionssystem mit einer offenzelligen, viskoelastischen Federschicht in Form einer Schaumstoffschicht 10 aus Polyurethan, einem mit der Schaumstoffschicht 10 kraftschlüssig verbundenen Haftvlies 20, einer mit dem Haftvlies 20 kraftschlüssig verbundenen, biegesteifen Folie 30 aus Polypropylen und einer schallabsorbierenden Schicht 40 in Form eines schallabsorbierenden Polyethylen-Schaumes. Zur lösbaren Befestigung des Schallreduktionssystem an einem Karosserieteil weisen dessen Komponenten 10, 20, 30 und 40 Befestigungseinrichtungen in Form von miteinander fluchtenden Löchern bzw. Durchgangsöffnungen 50 auf.

Das Haftvlies 20 wird während eines Tiefziehvorgangs der Folie 30 mit dieser durch gemeinsames Einlegen in ein Tiefziehwerkzeug verbunden. Der Tiefziehvorgang dient dazu, die Form der Folie 30 der Form des Karosserieteils anzupassen. Die Schaumstoffschicht 10 weist eine Dicke von ca. 10 mm auf und wird an die Folie 30 bzw. an das als Haftvermittler dienende Haftvlies 20 mit gleichmäßiger Dicke angeschäumt, wobei die Dicke auch variabel sein kann. Die Verbindung zwischen Folie 30 und Schaumstoffschicht 10 kann auch durch Kleben erfolgen, wobei hierbei das Haftvlies 20 entfallen kann. Die Folie 30 hat eine Dichte von ca. 950 kg/m³ und eine Dicke von ca. 1 mm, wodurch sich ein Flächengewicht von ca. 950 g/m² ergibt. Die schallabsorbierende Schicht 40 hat eine Dicke von ca. 20 mm und dient der Dämpfung von insbesondere mittel- und hochfrequenten Schallwellen im Innenraum des Kraftfahrzeugs. Die Folie 30 wird mit Hilfe eines Extruders hergestellt, wobei durch Zulaufenlassen von Bahnen der schallabsorbierenden Schicht 40 nach dem Extruder auf das noch klebrige Folienmaterial eine Verbindung zwischen der Folie 30 und der schallabsorbierenden Schicht 40 hergestellt werden kann.

Da die Karosserieteile in der Regel aus Blechteilen bestehen, die uneben sind und in der Regel aus mindestens einer Achse insbesondere aus beiden Achsen der Ebene abgebogen sind, ist auch das erfindungsgemäße Schallreduktionssystem mit seinen Schichten entsprechend dreidimensional aus der Ebene gebogen geformt. Bei der Folie 30 wird normalerweise eine flache, ebene Folie als Ausgangsmaterial verwendet, die bereits mit dem Haftvlies 20 und der schallabsorbierenden Schicht 40 versehen sein kann. Wenn die Schaumstoffschicht 10 angeschäumt wird, wird die bereits vorgeformte Folie 30 als Formteil für das Anschäumen verwendet. Wird die Schaumstoffschicht 10 angeklebt, kann sie bereits beim Schäumen entsprechend vorgeformt sein. Es ist auch möglich eine ebene Schaumstoffschicht 10 unter Anpassung an die Form der Folie 30 anzukleben, sowie vorgeformte Schaumstoffschichten, Vliesschichten, Flockenverbundmaterialien und Mischfaservliese anzubringen. Alle Schichten können über die gesamte Flächenausdehnung eine unabhängig voneinander variierende Dicke aufweisen, vorzugsweise besitzen sie eine im wesentlichen konstante Dicke. Die Flächenausdehnung des Schallabsorptionssystems entspricht im wesentlichen der Größe des jeweils zu bedeckenden Karosserieteils und liegt normalerweise bei 0,5 m² bis 1,5 m². Die Dicke des Systems liegt je nach Anzahl der Schichten zwischen 10 mm und 50 mm, insbesondere zwischen 20 mm und 40 mm.

Fig. 2 zeigt eine schematische Darstellung des auf einem Karosserieteil 60 befestigten Schallreduktionssystems von Fig. 1. Das Karosserieteil 60 weist auf einer dem Schallreduktionssystem zugewandten Oberfläche zylinderförmige Bolzen 70 auf, die durch die Löcher 50 des Schallreduktionssystems durchgesteckt sind. Aus Gründen der einfacheren Darstellung ist jeweils nur ein Loch 50 und ein Bolzen 70 dargestellt. Die Verteilung der Löcher 50 auf dem Schallreduktionssystem ist der Verteilung der Bolzen 70 auf dem Karosserieteil 60 angepasst. Zur lösbaren Verriegelung unter Ausübung von Druck auf die Folie 30 sind auf den Bolzen 70 Clipse 80 aufgesteckt, die in Rastnasen 90 einrasten. Der Druck wird durch die biegesteife Folie 30 derart flächig verteilt, dass die Schaumstoffschicht 10 teilweise, d.h. unter Beibehaltung einer Restverformbarkeit, gleichmäßig flächig komprimiert wird. Die biegesteife Folie 30 und die Schaumstoffschicht 10 bilden in Kombination mit dem Karosserieteil 60 ein Sandwichisolationssystem, bei dem sich unterschiedliche schallreduzierende Effekte vorteilhaft überlagern und ergänzen.

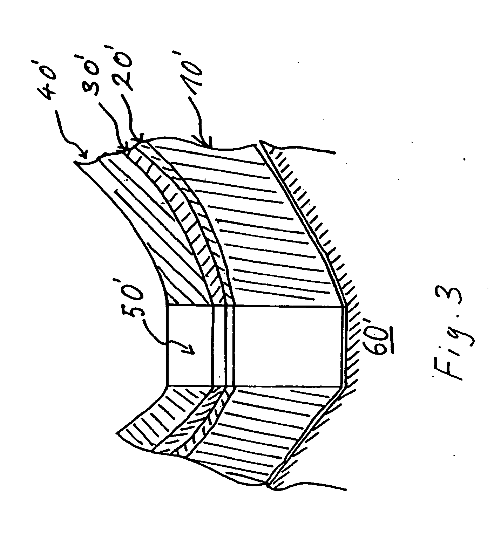

Fig. 3 zeigt eine schematische Darstellung eines dreidimensional geformten Schallreduktionssystems. Die Folie 30' weist eine der Form des Karosserieteils 60' angepasste dreidimensionale Form auf. Insbesondere aufgrund der Biegesteifigkeit der Folie 30' haben die anderen Schichten 10', 20' bzw. 40' des Schallreduktionssystems eine der Form der Folie 30' entsprechende Form. Ein derart dreidimensional geformtes Schallreduktionssystem lässt sich einfach auf dem Karosserieteil 60' befestigen.

Das dargestellte Schallreduktionssystem kann auf einem entsprechenden Karosserieblech beispielsweise im Stirnwand-, Tunnel-, Boden-, Hutablagen-, Dachhimmel und/oder Heckbereich angebracht sein. Denkbar ist auch eine Verwendung außerhalb des Fahrzeuginnenraums, beispielsweise im Motorraum und/oder im Radlauf, wobei grundsätzlich die Schaumstoffschicht 10 auf dem Blechteil 60 aufliegt. Hierbei kann das Sandwichisolationssystem auch mit wärmeabweisenden und/oder wärmeabsorbierenden Schichten versehen sein.

Mit Hilfe des gezeigten Schallreduktionssystems kann das auf die Schallreduktion entfallende Gewicht im Kraftfahrzeug bei gleichbleibenden oder sogar verbesserten akustischen Eigenschaften deutlich verringert werden.

## Patentansprüche

1. Schallreduktionssystem für Kraftfahrzeuge, das sowohl schalldämmende als auch schalldämpfende Eigenschaften im Bereich von 30 Hz bis 20 kHz aufweist, mit
- einer biegesteifen Folie (30),
- einer Federschicht (10), die mit einer einem Karosserieteil (60) des Kraftfahrzeugs zuzuwendenden Seite der Folie (30) verbunden ist, und
- Einrichtungen (50), insbesondere an der Folie (30) und der Federschicht (10), zum Befestigen an dem Karosserieteil (60) unter teilweiser Kompression der Federschicht (10),
**dadurch gekennzeichnet, dass**
- auf der von der Federschicht (10) abgewandten Seite der Folie (30) eine schallabsorbierende Schicht, insbesondere ein schallabsorbierendes Vlies (40) und/oder ein schallabsorbierender Schaum, angeordnet ist.

2. Schallreduktionssystem nach Anspruch 1, **dadurch gekennzeichnet, dass** die Folie (30) eine der Form des Karosserieteils (60) angepasste, insbesondere dreidimensionale, Form aufweist.

3. Schallreduktionssystem nach Anspruch 1 oder 2, **dadurch gekennzeichnet, dass** die Einrichtungen (50) für eine mechanische, lösbare Befestigung ausgebildet sind.

4. Schallreduktionssystem nach einem der vorhergehenden Ansprüche, **dadurch gekennzeichnet, dass** die Einrichtungen (50) Löcher in der Folie (30) und der Federschicht (10) sind, durch die auf dem Karosserieteil (60) angeordnete Bolzen (70) durchsteckbar sind.

5. Schallreduktionssystem nach Anspruch 4, **dadurch gekennzeichnet, dass** ihr Clipse (80) zugeordnet sind, die zur Verriegelung auf die Bolzen (70) aufsteckbar sind.

6. Schallreduktionssystem nach einem der vorhergehenden Ansprüche, **dadurch gekennzeichnet, dass** die Federschicht aus einer Schaumstoffschicht (10), vorzugsweise aus viskoelastischem Schaum, insbesondere aus einem viskoelastischen und/oder adhäsiven Polyurethanschaum, besteht.

7. Schallreduktionssystem nach einem der Ansprüche 1 bis 5, **dadurch gekennzeichnet, dass** die Federschicht (10) aus Flockenverbundmaterial, Flockfasermaterial, Faservliesmaterialien oder Schnittschäumen besteht.

8. Schallreduktionssystem nach einem der vorhergehenden Ansprüche, **dadurch gekennzeichnet, dass** die Federschicht, insbesondere die Schaumstoffschicht (10), an die Folie (30) angeschäumt, aufkaschiert oder aufgeklebt ist.

9. Schallreduktionssystem nach einem der vorhergehenden Ansprüche, **dadurch gekennzeichnet, dass** auf der Folie (30) mindestens auf ihrer der Federschicht (10) zugewandten Seite ein Haftvermittler, insbesondere ein Haftvlies (20) oder eine Haftvermittlerfolie, angeordnet ist.

10. Schallreduktionssystem nach einem der vorhergehenden Ansprüche, **dadurch gekennzeichnet, dass** die Dicke der schallabsorbierenden Schicht (40) in einem Bereich von 2 mm bis 30 mm liegt.

11. Schallreduktionssystem nach einem der vorhergehenden Ansprüche, **dadurch gekennzeichnet, dass** die Dichte der Folie (30) in einem Bereich von 300 kg/m³ bis 3000 kg/m³, insbesondere 900 kg/m³ bis 1100 kg/m³, liegt.

12. Schallreduktionssystem nach einem der vorhergehenden Ansprüche, **dadurch gekennzeichnet, dass** die Folie (30) aus Aluminium oder Kunststoff, vorzugsweise thermoplastischem Kunststoff, insbesondere aus Polypropylen, Polyethylen, Acrylnitril/Butadien/Styrol, Polyamid, Polyethylenterephtalat, Basis Ethylen/Propylen-Terpolymer/Propylen oder Acrylnitil/Styrol/Acrylester, besteht.

13. Schallreduktionssystem nach einem der vorhergehenden Ansprüche, **dadurch gekennzeichnet, dass** die Dicke der Folie (30) in einem Bereich von 0,3 mm bis 5 mm liegt.

14. Schallreduktionssystem nach einem der vorhergehenden Ansprüche, **dadurch gekennzeichnet, dass** auf der von der Federschicht (10) abgewandten Seite der Folie (30) eine Schwerschicht angeordnet ist, wobei die Schwerschicht insbesondere zwischen der Folie (30) und einer schallabsorbierenden Schicht (40) angeordnet ist.

15. Schallreduktionssystem nach einem der vorhergehenden Ansprüche, **dadurch gekennzeichnet, dass** die Folie (30) und die Federschicht (10) an dem Karosserieteil (60) unter teilweiser Kompression der Federschicht (10) befestigt sind.

16. Schallreduktionssystem nach Anspruch 15, **dadurch gekennzeichnet, dass** zwischen der Federschicht (10) und dem Karosserieteil (60) eine Körperschalldämpfungsfolie auf Bitumen- oder Kunststoffbasis angebracht ist.

17. Schallreduktionssystem nach Anspruch 16, **dadurch gekennzeichnet, dass** die Körperschalldämpfungsfolie mit einer Aluminiumabdeckung als Sandwich-System ausgeführt ist.

## Claims

1. Sound reduction system for motor vehicles, said sound reduction system having both sound insulating and sound dampening properties in the range from 30 Hz to 20 kHz, having
- a bending-resistant foil (30),
- a resilient layer (10) which is connected to a side, which faces towards a body part (60) of the motor vehicle, of the foil (30), and
- devices (50), in particular on the foil (30) and on the resilient layer (10), for providing fastening to the body part (60) with partial compression of the resilient layer (10),
**characterized in that**
- a sound-absorbing layer, in particular a sound-absorbing nonwoven (40) and/or a sound-absorbing foam, is arranged on that side of the foil (30) which faces away from the resilient layer (10).

2. Sound reduction system according to Claim 1, **characterized in that** the foil (30) has an in particular three-dimensional shape which is matched to the shape of the body part (60).

3. Sound reduction system according to Claim 1 or 2, **characterized in that** the devices (50) are designed to provide detachable mechanical fastening.

4. Sound reduction system according to one of the preceding claims, **characterized in that** the devices (50) are holes in the foil (30) and in the resilient layer (10), through which bolts (70), which are arranged on the body part (60), can be passed.

5. Sound reduction system according to Claim 4, **characterized in that** it is assigned clips (80) which can be placed on the bolts (70) to provide locking.

6. Sound reduction system according to one of the preceding claims, **characterized in that** the resilient layer is composed of a foamed material layer (10), preferably a visco-elastic foam made in particular from a visco-elastic and/or adhesive polyurethane foam.

7. Sound reduction system according to one of Claims 1 to 5, **characterized in that** the resilient layer (10) is composed of a composite flock material, flock fibre material, fibrous nonwoven materials or cut foams.

8. Sound reduction system according to one of the preceding claims, **characterized in that** the resilient layer, in particular the foamed material layer (10), is foamed, laminated or adhered onto the foil (30).

9. Sound reduction system according to one of the preceding claims, **characterized in that** an adhesion promoter, in particular an adhesion-promoting nonwoven (20) or an adhesion-promoting foil, is arranged on at least that side of the foil (30) which faces towards the resilient layer (10).

10. Sound reduction system according to one of the preceding claims, **characterized in that** the thickness of the sound-absorbing layer (40) is in a range from 2 mm to 30 mm.

11. Sound reduction system according to one of the preceding claims, **characterized in that** the density of the foil (30) is in a range from 300 kg/m³ to 3000 kg/m³, in particular 900 kg/m³ to 1100 kg/m³.

12. Sound reduction system according to one of the preceding claims, **characterized in that** the foil (30) is composed of aluminium or plastic, preferably thermoplastic, in particular polypropylene, polyethylene, acrylonitrile/butadiene/styrene, polyamide, polyethylene terephthalate, plastic based on ethylene/propylene-terpolymer/propylene, or acrylonitrile/styrene/acrylic ester.

13. Sound reduction system according to one of the preceding claims, **characterized in that** the thickness of the foil (30) is in a range from 0.3 mm to 5 mm.

14. Sound reduction system according to one of the preceding claims, **characterized in that** a heavy layer is arranged on that side of the foil (30) which faces away from the resilient layer (10), the heavy layer being arranged in particular between the foil (30) and a sound-absorbing layer (40).

15. Sound reduction system according to one of the preceding claims, **characterized in that** the foil (30) and the resilient layer (10) are fastened to the body part (60) with partial compression of the resilient layer (10).

16. Sound reduction system according to Claim 15, **characterized in that** a foil, based on bitumen or plastic, for dampening body-borne sound is attached between the resilient layer (10) and the body part (60).

17. Sound reduction system according to Claim 16, **characterized in that** the foil for dampening body-borne sound is formed as a sandwich system with an aluminium covering.

## Revendications

1. Système d'atténuation des bruits pour des véhicules automobiles, faisant preuve de propriétés insonorisantes et antisoniques dans la plage de 30 Hz à 20 kHz, avec
- un film résistant à la flexion (30),
- une couche flexible (10), qui est reliée à un côté du film (30) qui doit être dirigé vers un élément de carrosserie (60) du véhicule automobile, et
- des dispositifs (50), notamment sur le film (30) et sur la couche flexible (10), destinés à être fixés sur l'élément de carrosserie (60) sous compression partielle de la couche flexible (10),
**caractérisé en ce que**
- sur le côté du film (30) qui est opposé à la couche flexible (10) est disposée une couche d'isolation acoustique, notamment un non-tissé (40) isolant acoustique et/ou une mousse isolante acoustique.

2. Système d'atténuation des bruits selon la revendication 1, **caractérisé en ce que** le film (30) a une forme adaptée à celle de l'élément de carrosserie (60), notamment tridimensionnelle.

3. Système d'atténuation des bruits selon la revendication 1 ou 2, **caractérisé en ce que** les dispositifs (50) sont conçus pour une fixation mécanique, amovible.

4. Système d'atténuation des bruits selon l'une quelconque des revendications précédentes, **caractérisé en ce que** les dispositifs (50) sont des trous dans le film (30) et dans la couche flexible (10), à travers lesquels on peut enfoncer des boulons (70) disposés sur l'élément de carrosserie (60).

5. Système d'atténuation des bruits selon la revendication 4, **caractérisé en ce que** des clips (80) qui sont emboîtables pour le verrouillage sur les boulons (70) lui sont associés.

6. Système d'atténuation des bruits selon l'une quelconque des revendications précédentes, **caractérisé en ce que** la couche flexible est une couche de mousse synthétique (10), notamment en mousse viscoélastique, notamment en une mousse de polyuréthane viscoélastique et/ou adhésive.

7. Système d'atténuation des bruits selon l'une quelconque des revendications 1 à 5, **caractérisé en ce que** la couche flexible (10) est en matière composite floconneuse, en floc, en matières non-tissées fibreuses ou en mousses découpées.

8. Système d'atténuation des bruits selon l'une quelconque des revendications précédentes, **caractérisé en ce que** la couche flexible, notamment la couche en mousse synthétique (10) est expansée, contrecollée ou collée sur le film (30).

9. Système d'atténuation des bruits selon l'une quelconque des revendications précédentes, **caractérisée en ce qu'**un non tissé adhérent (20) ou un film d'agent adhésif est disposé sur le film (30), au moins sur sa face dirigée vers la couche flexible (10).

10. Système d'atténuation des bruits selon l'une quelconque des revendications précédentes, **caractérisé en ce que** l'épaisseur de la couche isolante acoustique (40) se situe dans une fourchette de 2 mm à 30 mm.

11. Système d'atténuation des bruits selon l'une quelconque des revendications précédentes, **caractérisé en ce que** la densité du film (30) se situe dans une fourchette de 300 kg/m³ à 3000 kg/m³, notamment de 900 kg/m³ à 1100 kg/m³.

12. Système d'atténuation des bruits selon l'une quelconque des revendications précédentes, **caractérisé en ce que** le film (30) est en aluminium ou en matière plastique, de préférence en matière thermoplastique, notamment en polypropylène, en polyéthylène, en acrylonitrile-styrène-butadiène, en polyamide, en polytéréphtalate d'éthylène, sur base éthylène/propylène-terpolymère/propylène ou en acrylonitrile/styrène/acryl-ester.

13. Système d'atténuation des bruits selon l'une quelconque des revendications précédentes, **caractérisé en ce que** l'épaisseur du film (30) se situe dans une fourchette de 0,3 mm à 5 mm.

14. Système d'atténuation des bruits selon l'une quelconque des revendications précédentes, **caractérisé en ce que** sur le côté du film (30) qui est opposé à la couche flexible (10) est disposée une couche lourde, la couche lourde étant disposée notamment entre le film (30) et une couche isolante acoustique (40).

15. Système d'atténuation des bruits selon l'une quelconque des revendications précédentes, **caractérisé en ce que** le film (30) et la couche flexible (10) sont fixés sur l'élément de carrosserie (60), sous compression partielle de la couche flexible (10).

16. Système d'atténuation des bruits selon la revendication 15, **caractérisé en ce qu'**un film d'insonorisation de la construction sur base de bitume ou de matière plastique est disposé entre la couche flexible (10) et l'élément de carrosserie (60).

17. Système d'atténuation des bruits selon la revendication 16, **caractérisé en ce que** le film d'insonorisation de la construction est réalisé avec un recouvrement en aluminium, sous la forme d'un système sandwich.
